Europäisches Patentamt

European Patent Office

Office européen des brevets

(19)

(11) **EP 0 806 726 B1**

(12) **EUROPEAN PATENT SPECIFICATION**

(45) Date of publication and mention
of the grant of the patent:
**07.08.2002   Bulletin 2002/32**

(51) Int Cl.⁷: **G06F 11/00**, G06F 11/10

(21) Application number: **97106985.1**

(22) Date of filing: **28.04.1997**

(54) **On-line memory monitoring system and methods**

Einrichtung und Verfahren zur On-line-Überwachung von Speichern

Système et procédé de surveillance en ligne de mémoire

(84) Designated Contracting States:
**DE FR GB IT NL SE**

(30) Priority:  **10.05.1996  US 644314**

(43) Date of publication of application:
**12.11.1997   Bulletin 1997/46**

(73) Proprietor: **Sun Microsystems, Inc.**
**Palo Alto, California 94303 (US)**

(72) Inventor: **Zhu, Ji**
**Fremont, CA 94536 (US)**

(74) Representative: **Zangs, Rainer E., Dipl.-Ing. et al**
**Hoffmann Eitle,**
**Patent- und Rechtsanwälte,**
**Arabellastrasse 4**
**81925 München (DE)**

(56) References cited:
**US-A- 4 809 276          US-A- 5 263 032**

• **IBM TECHNICAL DISCLOSURE BULLETIN, vol.
12, no. 6, November 1969, NEW YORK, US, page
895 XP002037319 ANONYMOUS: "Error
Frequency Warning Detector on Storage with
ECC. November 1969."**
• **IBM TECHNICAL DISCLOSURE BULLETIN, vol.
32, no. 10B, 1 March 1990, page 117
XP000097821 "DOUBLE THRESHOLDING OF
ERRORS"**

EP 0 806 726 B1

**Description**

1. Field of the Invention

The present invention relates to the field of computer memory systems and the performance thereof.

2. Prior Art

Most computer systems include, among other things, substantial storage capacity in the form of random access memory, currently most commonly in the form of dynamic random access memory (DRAM). Such memories and systems incorporating such memories are known to be subject to certain types of errors. For instance, in the memory itself, the errors may be generally classified as either soft errors or hard errors. Soft errors are errors which occasionally occur, but are not repeatable, at least on a regular basis. Thus, soft errors alter data, though the stored data may be corrected by rewriting the correct data to the same memory location. A major cause of soft errors in DRAMs are alpha particles which, because of the very small size of DRAM storage cells, can dislocate sufficient numbers of electrons forming the charge determining the state of the cell to result in the cell being read as being in the opposite state. This results in a relatively randomly occurring, single-bit memory error which, because of its very low likelihood of reoccurrence in the near future, can be corrected by rewriting the correct data to that memory location. Soft errors can also be related to noise in the memory system, or due to unstable DRAMS or SIMMs (DRAMs in the form of single inline memory modules).

Hard errors in the memory are repeatable errors which alter data due to some fault in the memory, and cannot be recovered by rewriting the correct data to the same memory location. Hard errors can occur when one memory cell becomes stuck in either state, or when SIMMs are not properly seated.

Silent failures are failures that cannot be detected by the system. For example, if a standby part fails inside a system having redundant parts, most systems will remain unaware of the failure. However, although the system is still functional, it has lost its redundancy as if the same had never been provided, and is now vulnerable to a single failure of the operating part. Soft errors and hard errors can be either be single-bit or multiple-bit memory errors, and can also be silent failures under certain conditions.

Relevant background art is described in the following two documents.

IBM Technical Disclosure Bulletin, November 1969, Vol. 12, No. 6, page 895 describes an error frequency warning detector on storage with an ECC, wherein in a data store using error correction to correct single-bit errors and detect double-bit errors, an error frequency counter is used to indicate the rate at which single-errors are occurring. The error rate indicates the amount by which the performance of the store is degraded by correcting single-bit errors. The error frequency counter is incremented each time a single-bit error occurs. An interval timer resets the counter after a predetermined time interval. The count is compared with a preset limit. An error frequency limit interrupt signal is generated when the count is equal to or greater than the error frequency limit. The interrupt signal causes a warning message to be printed.

US-A-5,263,032 describes the operation of a computer system with a corrected read data function in which a computer system having a memory with an ECC function employs an improved method for handling corrected read data events, so transient errors caused by alpha particle hits in DRAMs may be distinguished from hard errors. When a corrected read data event occurs, a footprint defining its location is compared with previously-stored footprints to determine if this location has failed before. Also, a location showing a corrected read data event is "scrubbed" (data is read, corrected and rewritten) so transient error locations are removed. If another corrected read data event occurs for this same location, after scrubbing, then the location is assumed to have a hard fault, and so the page containing this location is replaced.

Currently, server systems manufactured and sold by Sun Microsystems, Inc., assignee of the present invention, are implemented with an error correction code (ECC) to protect the system from single-bit memory errors. In the event of a single-bit memory error in the data or the correction code as read from memory, the system automatically corrects the error before the data retrieved from memory is used. This is implemented using an 8-bit KANEDA error correction code for the 64-bit dataword of the memories, making the entire codeword 72-bits wide. The actual error detection and correction operation is done, for instance, by dedicated ECC circuitry as part of the processor module so that on the occurrence of a single-bit memory error in the 72-bit codeword received from memory, the same will automatically be corrected before being presented to the processor. Also, upon the occurrence of a single-bit error and the correction thereof by the ECC circuitry, the processor is alerted to that fact so that the processor will include the additional step of writing the corrected codeword (data and ECC) back to memory on the unverified assumption that the single-bit error was a soft error. In such systems, the I/O of the system consists of a 64-bit word, the applicable ECC code being tacked onto any dataword before the resulting 72-bit codeword is written to memory.

Also, in the current systems of the type described, an automatic reset is initiated upon the occurrence of a double-bit memory error. This, of course, results in an interruption of service by the system, loss of any ongoing communication, and loss of data. Because a double-bit error is a rare event under normal operating conditions, such system failures caused by double-bit memory errors are also rare. However, normal operating conditions may be defined as operation without excessive memory errors occurring in the system, wherein the ECC implementation described provides adequate protection for the integrity of the system memory. But two events can change a normal operating condition into an abnormal operating condition, specifically that (1) the memory subsystem has excessive single-bit soft errors, and (2) the memory subsystem has single-bit hard errors. These occurrences obviously greatly increase the probability that a normally expected soft error will become a second bit error causing automatic interruption of the system.

In the current ECC implementation, no memory error log is visible to the system administrator. Thus, whenever there is a single-bit memory error, the system simply corrects it and continues to run. Under normal operating conditions, protecting the system from single-bit errors is the purpose of the ECC. Under abnormal operating conditions, the ECC actually masks the underlying problem. When the memory subsystem has either excessive single-bit soft errors or single-bit hard errors, they become silent failures in the current ECC implementation. The system then becomes prone to single-bit errors so that an additional single-bit memory error combined with the silent failure may result in a double-bit error, bringing the system down.

SUMMARY OF THE INVENTION

The present invention as defined by the claims specifies an on-line memory monitoring system, an apparatus and a method wherein memory subsystem performance is tracked to detect substandard performance and alert a system administrator of the nature of the substandard performance so corrective action can be taken before a system crash and/or automatic reset occurs. A computer system incorporating the invention includes a memory and a processor, wherein the memory storage includes data storage and error correction code storage for each dataword. The system further includes automatic error detection and correction circuitry and software which monitors the occurrence of correction of errors and compares their frequency with the known frequency of soft errors for the memory devices being used to determine whether an alert is to be given and the nature of any such alert.

The on-line memory monitoring system uses a unique statistical inference method based on the number of single-bit memory errors and the frequency of their occurrence as observed by the system to provide the appropriate alert.

BRIEF DESCRIPTION OF THE FIGURES

Figure 1 is a block diagram of the internal structure of the CPU/memory board of a system which may incorporate the present invention.

Figure 2 is a logic flow diagram for the operation of 'the on-line memory monitoring system.

Figure 3 illustrates a typical system that may use the present invention.

DETAILED DESCRIPTION OF THE INVENTION

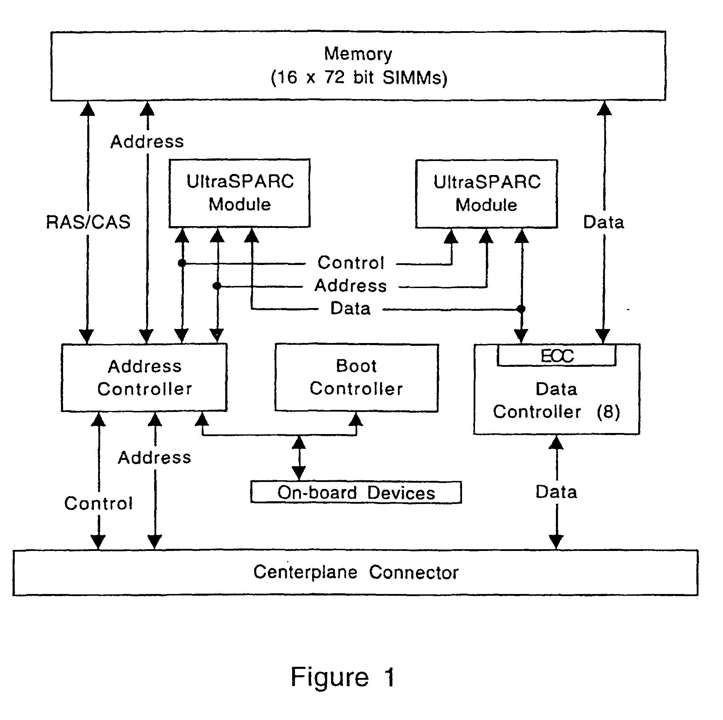

First referring to Figure 1, a block diagram of the internal structure of the CPU/memory board for the Enterprise X000 server systems to be introduced by Sun Microsystems, Inc., assignee of the present invention. As may be seen therein, the CPU/memory board contains two UltraSPARC modules containing high performance superscalar 64-bit SPARC processors. These modules are coupled through address and data controllers to memory and to a centerplane connector for connecting to a system bus structure. Also shown in Figure 1 is a boot controller and other on-board devices, their specific structure being well known and not important to the present invention.

As with the prior art systems of Sun Microsystems, Inc., the memory is 72 bits wide, providing 64 bits of data and 8 bits of ECC. However in accordance with the present invention, continuous on-line monitoring of memory errors is provided. As soon as the memory is found to have excessive single-bit soft errors relative to known statistics for such memories, or single-bit hard errors, a warning or alert may be presented to the system administrator so that corrective action can be taken. In the preferred embodiment, the on-line monitoring is done under software control, and continually monitors the system, logging all single-bit errors and the memory device in which such errors occurred. Upon the occurrence of another error, the on-line monitoring software analyzes the error log using statistical analysis to identify any abnormal operating condition that may be indicated. Since occasional memory errors are to be expected for dynamic random access memories (DRAMs), single-bit errors encountered in a properly operating system will be found to not indicate an abnormal operating condition, but once the rate of errors indicate an abnormal operating condition, the system administrator can be alerted to the condition and the memory device causing the problem.

An abnormal operating condition will be caused by either type of memory error, specifically excessive single-bit soft errors, or single-bit hard errors. From a system point of view, both types of errors are single-bit errors that occur at an excessive rate. The only difference between the two is that the hard errors can show up each time that part of the memory is accessed, while the soft errors may appear less frequently. This occurs because the hard errors are not correctable in memory by merely writing the corrected information back into memory. In that regard, note that a bad memory cell hung in one state may or may not show up on any read access thereto as a hard error. As an example, if an instruction, or fixed data, is stored at that location in memory, one will either get a single-bit error every time that location is accessed for reading if the cell is hung in the opposite state from the corresponding bit in the instruction or fixed data, or no error will be encountered when that location is accessed for reading if the cell is hung in the same state as the corresponding bit in the instruction or fixed data. On the other hand, if the location is used for storage of random or near random data, then the fault will result in a single-bit error about half the time new data therein is read.

Memory is made of DRAMS, for which the frequency and distribution of single-bit errors under normal operating conditions are known. If the detected DRAM single-bit errors far exceed what is expected under normal operating conditions, it can be concluded that the memory is having excessive single-bit errors. During normal operating conditions, only soft errors should occur in the DRAM, and then only within the reasonably expected frequency for such DRAMs. Single-bit soft errors occur in DRAMs in a Poisson distribution as follows:

$$P(x) = \frac{(\lambda t)^x}{x!}\, e^{-\lambda t} \qquad x = 0,1,2,...$$

where:

t =        time
x =        the number of soft errors during a given time t
$\lambda$ =        the mean number of soft errors during a given time t representative of the DRAMs used
P(x) =    the probability of encountering x soft errors in a given time t

A Poisson distribution is a single parameter and discrete event distribution.

Based on previous testing, exemplary failure rates for certain DRAMs are set out in Table 1:

Table 1:

| Exemplary DRAM Failure Rates | | |
|---|---|---|
| Memory Size | Memory Organization | Average Failure Rate |
| 1 Mb | 1Mx1 | 2,000 FIT* |
| 4 Mb | 1Mx4, 4Mx1 | 3,000 FIT |
| 16 Mb | 4Mx4 | 9,000 FIT |

* One FIT is one failure per $10^9$ hours of operation

Based on the foregoing formula and failure rates in Table 1, a system's failure rate under normal operating conditions can be determined. The Table 2 shows the probability of having 0, 1, 2 and 3 or more failures per SIMM using 1 Mb DRAM.

Table 2:

| Probability Table of Single-Bit Soft Errors | | | | |
|---|---|---|---|---|
| | Probability of having x number of soft errors over time per SIMM | | | |
| Time (days) | x = 0 | x = 1 | x = 2 | x ≥ 3 |
| 1 | 0.999136 | 0.000863 | 3.70E-07 | 1.07E-10 |
| 2 | 0.998273 | 0.001725 | 1.50E-06 | 8.59E-10 |
| 3 | 0.997411 | 0.002585 | 3.40E-06 | 2.90E-09 |
| 4 | 0.996550 | 0.003444 | 6.00E-06 | 6.86E-09 |
| 5 | 0.995689 | 0.004301 | 9.30E-06 | 1.34E-08 |

Table 2: (continued)

| Probability Table of Single-Bit Soft Errors | | | | |
|---|---|---|---|---|
| | Probability of having x number of soft errors over time per SIMM | | | |
| Time (days) | x = 0 | x = 1 | x = 2 | x ≥ 3 |
| 6 | 0.994829 | 0.005157 | 0.000013 | 2.31E-08 |
| 7 | 0.993970 | 0.006012 | 0.000018 | 3.67E-08 |
| 8 | 0.993112 | 0.006864 | 0.000024 | 5.48E-08 |
| 9 | 0.992254 | 0.007716 | 0.000030 | 7.79E-08 |
| 10 | 0.991397 | 0.008566 | 0.000037 | 1.07E-07 |

Once the DRAM's failure rate and failure distribution are determined, the on-line monitoring software can assess the system's operating condition based on the number of memory errors being detected. This can be accomplished by using a statistical analysis.

In accordance with the present invention, a statistical inference method is developed to determine whether the system is running under normal operating conditions. This statistical inference method establishes two hypotheses as follows:

1. $H_0$ means that the DRAM error rate is as listed in Table 1, indicating that the system is running under normal operating conditions.

2. $H_1$ means that the DRAM error rate is much higher than what is listed in Table 1, indicating that the system is running under abnormal operating conditions.

In this hypothesis test, the criteria for accepting $H_0$ or $H_1$ is based on the probability of the number of memory errors per SIMM that are observed during the test period. In the exemplary embodiment, if the probability is less than 0.0001 (0.01% chance of happening), an extremely unlikely event, the $H_0$ hypothesis is rejected and the alternative $H_1$ hypothesis is accepted. Rejecting $H_0$ means that the system, with very little doubt, is having excessive memory errors, and the system administrator should be alerted to take the necessary corrective steps. If the probability is higher than 0.0001, the event is considered to be a sufficiently likely event as to be within the statistics of normal operating conditions and the test continues. Obviously, the threshold between a sufficiently likely event to ignore and a sufficiently unlikely event to provide an alert may be altered as desired.

As stated before, the on-line monitoring is done by the processor under software control. Upon the detection of a single-bit error detected and corrected by the ECC circuitry, the processor will carry out the further steps of updating the error log, apply the hypothesis test to the error log information, notify the system administrator of the type and location of the problem if appropriate, and write the corrected data and ECC information back into the memory location from which the data and ECC in error was obtained. The corrected data and ECC is written back into memory on the unverified assumption that the error was a soft error correctable by writing good data (and associated ECC) over the bad data and ECC.

To simplify the implementation of the hypothesis test in the on-line monitoring software, the following exemplary set of steps may be used (no particular order of the steps is to be implied herein and in the claims unless and only to the extent a particular step requires the completion of another step before the particular step may itself be completed). The on-line software in this exemplary embodiment will log the memory errors for up to three test periods (time periods) as listed in Table 3. Each time a memory error occurs, the software checks to see if the number of memory errors observed during the three test periods has exceeded the number of memory errors allowed for each of those time periods.

Table 3:

| Decision Set of Rules | | | | | | |
|---|---|---|---|---|---|---|
| DRAM Size | Test Period 1 | # of Errors Allowed per SIMM | Test Period 2 | # of Errors Allowed per SIMM | Test Period 3 | # of Errors Allowed per SIMM |
| 1 Mb | 2 hrs | 1 | 16 days | 1 | 30 days | 2 |

Table 3: (continued)

| Decision Set of Rules | | | | | | |
|---|---|---|---|---|---|---|
| DRAM Size | Test Period 1 | # of Errors Allowed per SIMM | Test Period 2 | # of Errors Allowed per SIMM | Test Period 3 | # of Errors Allowed per SIMM |
| 4 Mb | 2 hrs | 1 | 11 days | 1 | 30 days | 2 |
| 16 Mb | 2 hrs | 1 | 4 days | 1 | 22 days | 2 |

If the number of observed errors does not exceed the allowed number of errors during all three test periods, the process will continue with no alert being given. If the number of allowable errors is exceeded for any of the time periods, the system administrator will be alerted by the processor. Based on the severity of the problem, preferably one of two levels of alarms are sent to the system administrator: a Red Flag indicating immediate action required, or a Yellow Flag indicating action required, but suggesting a less urgent requirement, as set out in Table 4 below:

| | Time During Which the Error is Observed | | |
|---|---|---|---|
| | Test Period 1 | Test Period 2 | Test Period 3 |
| Alarm Level | Red Flag | Yellow Flag | Yellow Flag |

Table 4:  Alarm Levels

Assuming SIMM type memory components are being used, and since excessive single-bit memory errors can be caused by either a bad SIMM or an improperly seated SIMM, on an alert it may be preferable to first try to re-seat the SIMMs to see if the abnormal error condition repeats before replacing the SIMM.

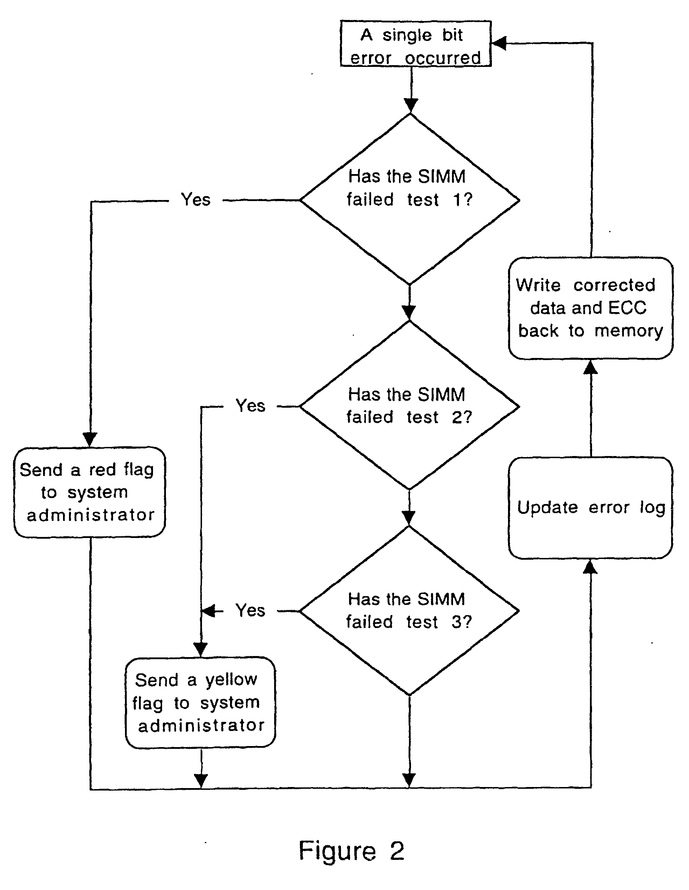

Now referring to Figure 2, a logic flow diagram for the operation of the preferred embodiment of the on-line memory monitoring system of the present invention may be seen. Whenever the ECC circuitry detects a single-bit error, the on-line memory monitoring analysis is initiated. The first test is to check the error log to determine if the same SIMM has given a single-bit error in the last two hours. In the preferred embodiment, the error is maintained as a running log, maintaining the log of the time the error occurred and the SIMM for which it occurred for all single-bit errors for the longest test period used. For the 1 Mb and the 4 Mb devices of Table 3, the log would be maintained to cover the last 30 days. For the 16 Mb devices, the error log would be maintained to cover the last 22 days.

Returning again to Figure 2, if the current single-bit error was from a SIMM which gave a single-bit error within the last two hours (test 1 of Table 3), a red flag is sent to the system administrator, indicating a most serious condition caused either by one or more hard errors, or at least an extraordinarily high rate of soft errors.

If the SIMM had not failed in the last two hours, a second test is made to see if the SIMM has failed within the time of test period 2 of Table 3, which in the exemplary embodiment will vary dependent upon the DRAM size in question. If there has been another soft error within that time period, a yellow flag is sent to the system administrator, indicating a less serious condition than a red flag, but still indicating single-bit errors have occurred at a statistically very unlikely rate.

Finally, if there has been no other soft error for that SIMM during test period 2, a check is made to see if two prior single-bit errors have occurred during the immediately prior test period 3 of Table 3. Here too, if two such soft errors have occurred, a yellow flag is sent to the system administrator so indicating. In any event, on completion of these tests, successful or not, the error log for the SIMM giving the single-bit error will be updated, and sometime during this entire process the corrected data and ECC will be written back to memory on the unverified assumption that the error was a soft error and thus correctable by so doing. Obviously, one could vary the foregoing tests and test periods as desired and/or as appropriate for DRAMs of different soft error rates, the numbers specifically disclosed herein for a preferred embodiment and the number of tests conducted being only exemplary of a particular embodiment of the invention.

Thus the on-line memory monitoring system uses a unique statistical inference method previously described based on the number of single-bit memory errors and the frequency of their occurrence as observed by the system provide the appropriate alert.

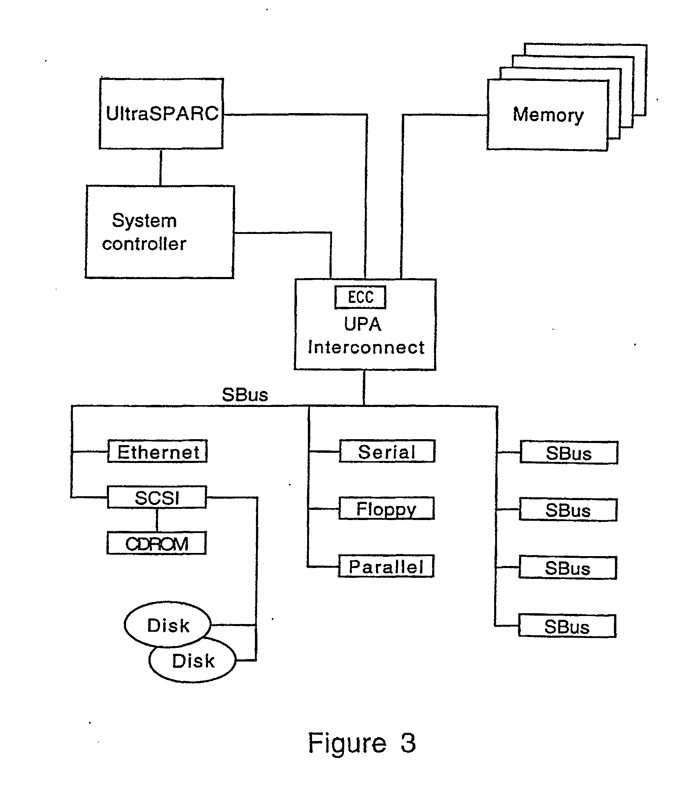

A typical system that may use the present invention may be seen in Figure 3. Here an UltraSPARC processor (CPU), read/write random access memory and system controller are connected through a UPA Interconnect to the SBus to which various peripherals, communication connections and further bus connections are connected. The UPA (Ultra Port Architecture) Interconnect is a cache-coherent, processor-memory interconnect, the precise details of which are not important to the present invention. In the system shown, the error detection and correction circuitry is within the UPA Interconnect (though the ECC circuitry could be elsewhere in the data path to and from the memory, or for that matter the ECC function could be done in software, though this is not preferred because of speed considerations). The UPA Interconnect couples the CPU/memory in the system shown in Figure 3 to an Ethernet connection, and hard disk drives and a CDROM through a SCSI port. It also couples the CPU/memory to a serial port, a floppy disk drive and a parallel port, as well as a number of SBus connectors to which other SBus compatible devices may be connected.

The software program for carrying out the operations of the flow chart of Figure 2 normally resides on one of the disk drives in the system. On booting (turn-on) of the system, part of the code is loaded through the UPA Interconnect into the memory. This code causes the CPU to respond to the occurrence of a single-bit error, as flagged and corrected by the ECC circuitry, by calling the rest of the on-line memory monitoring program code into memory and to execute the same to update the error log and to provide the appropriate warning flag to the system administrator.

While a preferred embodiment of the present invention has been disclosed and described herein, it will be obvious to those skilled in the art that various changes in form and detail may be made therein without departing from the scope of the invention, which is defined by the appended claims.

**Claims**

**1.** A method of improving memory reliability in a computer comprising:

(a) providing an error correction code with data stored in memory;
(b) detecting and correcting single-bit memory errors as they occur using the error correction code;
(c) determining the rate at which single-bit errors occur;
and
(d) providing a warning if the operating conditions are abnormal whereby to indicate the potential occurrence of multiple-bit errors.
**characterised by**
(e) employing a statistical inference method to determine from said rate, and average failure rates for the memory, whether the memory is running under normal or abnormal conditions;

**2.** On-line memory monitoring apparatus comprising:

a processor;
a read/write random access memory coupled to the processor, the random access memory being configured to store data words and associated error correction codes;
error detection and correction circuitry coupled to the read/write random access memory, the error detection and correction circuitry being configured to determine the specific error correction code to be written to the memory with each data word to be written to memory, and to detect and correct single-bit errors in data and associated error correction codes as read from memory; and
an error monitor configured to respond to the error detection and correction circuitry to provide a warning indicating the potential occurrence of multiple-bit errors, if the memory is running under abnormal conditions,
**characterised in that**
the monitor generates a log of detected single-bit errors and **in that** the provision of said warning is computed by statistical inference from the rate at which single-bit memory errors have occurred and average failure rates from the memory.

**3.** The apparatus of Claim 2, wherein the processor is configured to write the corrected data and associated error correction code back into the memory at the memory location from which it was read upon detection and correction of an error in data and associated error correction code read from the memory.

**4.** The apparatus of Claim 3, wherein the error monitor is configured to respond to the error detection and correction circuitry to provide a said warning if the rate at which single-bit memory errors have occurred over either a first or a second time period exceeds first and second predetermined memory error rate limits, respectively.

**5.** The apparatus of Claim 4 wherein the error monitor is configured to provide a said warning indicative of a memory failure if the rate at which single-bit memory errors have occurred over the first time period exceeds the first predetermined memory error rate limit, and of providing a said warning indicative of an unusually high error rate if the rate at which single-bit memory errors have occurred over the second time period exceeds the second predetermined error rate limit.

**6.** A system for on-line memory monitoring responsive to the detection and correction of a single-bit memory error, the system including code configured for storage on a computer-readable apparatus and executable by a computer, the code including a plurality of modules, the system including:

a first module configured to maintain a single-bit memory error log;
a second module configured to respond to the detection and correction of a single-bit memory error to determine using the memory error log if the rate at which single-bit memory errors have occurred exceeds a predetermined limit;
a third module logically coupled to the second module and configured to provide a warning if the second module determines that the rate at which single-bit memory errors have occurred exceeds the predetermined limit; and
a fourth module logically coupled to the first module and configured to update the error log upon the detection and correction of a single-bit memory error;

wherein the system employs a statistical inference method to determine from said rate, and average failure rates for the memory, whether the memory is running under normal or abnormal operating conditions, abnormal operating conditions corresponding to the single-bit memory rate exceeding the predetermined limit;
and wherein the warning is indicative of abnormal operating conditions and the potential occurrence of multiple-bit errors.

**7.** The system of Claim 6, further comprising a fifth module configured to overwrite the memory after detection and correction of a memory error.

**8.** A system of Claim 6, wherein the second module is configured to respond to the detection and correction of a single-bit memory error to determine using the memory error log if the rate at which single-bit memory errors have occurred exceeds a first or a second predetermined limit and the third module is configured to provide a warning of a first character if the second module determines that the rate at which memory errors have occurred exceeds the first predetermined limit, and further comprising a fifth module configured to provide a warning of a second character if the second module determines that the rate at which memory errors have occurred exceeds the second predetermined limit.

**9.** A method as claimed in Claim 1, including the steps of determining the rate at which single-bit memory errors have occurred over a first elapsed time and determining the rate at which single-bit memory errors have occurred over a second elapsed time longer than the first elapsed time, and wherein a said warning is also provided when the rate at which single-bit memory errors have occurred over either the first or the second time period exceeds first and second predetermined memory error rate limits, respectively.

**10.** A method as claimed in Claim 1, further comprising:

using the corrected data as error-free data;
writing the corrected data and error correction code back into the same memory location from which it was read; and
providing a respective warning if the rate at which single-bit memory errors have occurred exceeds a predetermined limit.

**11.** The apparatus as claimed in Claim 2, further comprising:

a CPU/memory board having at least one bus connector for connecting to a system bus, wherein the processor is coupled to the bus connector, the processor being configured to write the corrected data and associated error correction code back into the memory at the memory location from which it was read upon detection and correction of an error in data and associated error correction code read from the memory.

**Patentansprüche**

1. Verfahren zum Verbessern von Speicherzuverlässigkeit in einem Computer, umfassend:

   (a) Vorsehen eines Fehlerkorrekturcodes mit im Speicher gespeicherten Daten;

   (b) Erfassen und Korrigieren von Einzelbitspeicherfehlern wie sie auftreten unter Verwendung des Fehlerkorrekturcodes;

   (c) Bestimmen der Rate, mit der Einzelbitfehler auftreten;

   (d) Bereitstellen einer Warnung wenn die Betriebsbedingungen anormal sind, hierdurch das mögliche Auftreten von Mehrbitfehlern anzeigend,
   **gekennzeichnet durch**

   (e) Verwenden eines statistischen Inferenzverfahrens, um von dieser Rate und Durchschnittsfehlerraten für den Speicher zu bestimmen ob der Speicher unter Normaloder Anormalbedingungen betrieben wird.

2. Online-Speicherüberwachungsvorrichtung; umfassend:

   einen Prozessor;

   einen mit dem Prozessor gekoppelten Lese/Schreibspeicher mit wahlfreiem Zugriff, wobei der Speicher mit wahlfreiem Zugriff konfiguriert ist zum Speichern von Daten und Wörtern und zugeordneten Fehlerkorrekturcodes;

   eine Fehlererfassungs- und Korrekturschaltung, die mit dem Lese/Schreibspeicher wahlfreien Zugriffs gekoppelt ist, wobei die Fehlererfassungs- und Korrekturschaltung konfiguriert ist zum Bestimmen des spezifischen Fehlerkorrekturcodes, der in den Speicher zu schreiben ist mit jedem in den Speicher zu schreibenden Datenwort und zum Erfassen und Korrigieren von Einzelbitfehlern in Daten und zugeordneten Fehlerkorrekturcodes, wie sie vom Speicher gelesen werden; und

   einen Fehlermonitor, der aufgebaut ist um anzusprechen auf die Fehlererfassungs- und Korrekturschaltung zum Bereitstellen einer Warnung, die das potenzielle Auftreten von Mehrbitfehlern anzeigt, wenn der Speicher unter anormalen Bedingungen betrieben wird,

   **dadurch gekennzeichnet, dass**
   der Monitor ein Protokoll der erfassten Einzelbitfehler generiert und dass das Vorsehen der Warnung berechnet wird durch statistische Inferenz aus der Rate, mit der Einzelbitspeicherfehler aufgetreten sind und den Durchschnittsfehlerraten des Speichers.

3. Vorrichtung nach Anspruch 2, wobei der Prozessor konfiguriert ist zum Schreiben der korrigierten Daten und des zugeordneten Fehlerkorrekturcodes zurück in den Speicher an den Speicherort, von dem sie gelesen worden sind auf das Erfassen und Korrigieren eines Fehlers in aus dem Speicher gelesenen Daten und zugeordneten Korrekturcodes hin.

4. Vorrichtung nach Anspruch 3, wobei der Fehlermonitor konfiguriert ist, um anzusprechen auf die Fehlererfassungs- und Korrekturschaltung zum Bereitstellen der Warnung, wenn die Rate, bei der Einzelbitspeicherfehler aufgetreten sind entweder in einer ersten oder zweiten Zeitperiode erste bzw. zweite vorbestimmte Speicherfehlerratengrenzen übersteigt.

5. Vorrichtung nach Anspruch 4, wobei der Fehlermonitor konfiguriert ist zum Bereitstellen der für einen Speicherfehler indikativen Warnung, wenn die Rate, bei der innerhalb der ersten Zeitperiode Einzelbitspeicherfehler aufgetreten sind, die erste vorbestimmte Speicherfehlerratengrenze übersteigt und um die für eine ungewöhnlich hohe Fehlerrate indikative Warnung bereitzustellen, wenn die Rate, bei der innerhalb der zweiten Zeitperiode Einzelbitspeicherfehler aufgetreten sind, die zweite vorbestimmte Fehlerratengrenze übersteigt.

6. System für einen Online-Speichermonitor, ansprechend auf das Erfassen und Korrigieren eines Einzelbitspeicherfehlers, wobei das System Code einschließt, der konfiguriert ist zum Speichern in einem computerlesbaren Gerät und zum Ausführen durch einen Computer, wobei der Code eine Vielzahl von Modulen einschließt und das System einschließt:

ein erstes Modul, konfiguriert zum Pflegen eines Einzelbitspeicherfehlerprotokolls;

ein zweites Modul, konfiguriert um anzusprechen auf das Erfassen und Korrigieren eines Einzelbitspeicherfehlers zum Bestimmen der Verwendung des Speicherfehlerprotokolls, wenn die Rate, mit der Einzelbitspeicherfehler aufgetreten sind, eine vorbestimmte Grenze übersteigt;

ein drittes Modul, das logisch mit dem zweiten Modul gekoppelt ist und konfiguriert ist zum Bereitstellen einer Warnung, wenn das zweite Modul bestimmt, dass die Rate, bei der Einzelbitspeicherfehler aufgetreten sind, die vorbestimmte Grenze überschreitet; und

ein viertes Modul, das logisch gekoppelt ist mit dem ersten Modul und konfiguriert, um das Fehlerprotokoll zu aktualisieren auf das Erfassen und Korrigieren eines Einzelbitspeicherfehlers hin;

wobei das System ein statistisches Inferenzverfahren verwendet zum Bestimmen von dieser Rate und Durchschnittsfehlerraten für den Speicher, ob der Speicher unter Normal- oder Anormalbetriebsbedingungen arbeitet, wobei Anormalbetriebsbedingungen Einzelbitspeicherraten entsprechen, die die vorbestimmte Grenze überschreiten;
und wobei die Warnung indikativ ist für Anormalbetriebsbedingungen und das potenzielle Auftreten von Mehrbitfehlern.

7. System nach Anspruch 6, außerdem eine fünftes Modul umfassend, das konfiguriert ist zum Überschreiben des Speichers nach dem Erfassen und Korrigieren eines Speicherfehlers.

8. System nach Anspruch 6, wobei das zweite Modul konfiguriert ist um anzusprechen auf das Erfassen und Korrigieren eines Einzelbitspeicherfehlers zum Bestimmen der Verwendung des Speicherfehlerprotokolls, wenn die Rate, mit der Einzelbitspeicherfehler aufgetreten sind, eine erste oder eine zweite Grenze übersteigt und das dritte Modul konfiguriert ist zum Bereitstellen einer Warnung einer ersten Art, wenn das zweite Modul bestimmt, dass die Rate, mit der Speicherfehler aufgetreten sind, die erste vorbestimmte Grenze übersteigt und außerdem ein fünftes Modul umfassend, das konfiguriert ist zum Bereitstellen einer Warnung einer zweiten Art, wenn das zweite Modul bestimmt, dass die Rate, mit der Speicherfehler aufgetreten sind, die zweite vorbestimmte Grenze übersteigt.

9. Verfahren nach Anspruch 1, die Schritte des Bestimmens der Rate einschließend, bei denen Einzelbitspeicherfehler aufgetreten sind über eine erste abgelaufene Zeit und die Rate bestimmend, bei der Einzelbitspeicherfehler aufgetreten sind über eine zweite abgelaufene Zeit, die länger ist als die erste abgelaufene Zeit, und wobei die Warnung auch bereitgestellt wird, wenn die Rate, mit der Einzelbitspeicherfehler aufgetreten sind, über entweder die erste oder die zweite Zeitperiode die erste bzw. zweite vorbestimmte Speicherfehlerratengrenze übersteigt.

10. Verfahren nach Anspruch 1, außerdem umfassend:

das Verwenden der korrigierten Daten als fehlerfreie Daten;

das Schreiben der korrigierten Daten und Fehlerkorrekturcode zurück an denselben Speicherort, von dem sie gelesen worden sind; und

das Vorsehen einer jeweiligen Warnung, wenn die Rate, bei der Einzelbitspeicherfehler aufgetreten sind, eine vorbestimmte Grenze übersteigt.

11. Vorrichtung nach Anspruch 2, außerdem umfassend:

Eine CPU/Speicher-Leiterplatte mit mindestens einem Bus-Verbinder zum Verbinden mit einem System-Bus, wobei der Prozessor mit dem Busverbinder gekoppelt ist, der Prozessor konfiguriert ist zum Schreiben der korrigierten Daten und zugeordnetem Fehlerkorrekturcode zurück in den Speicher an den Speicherort, von dem sie gelesen worden sind auf das Erfassen und Korrigieren eines Fehlers in Daten und zugeordnetem Fehlerkorrekturcode hin, die von dem Speicher gelesen worden sind.

**Revendications**

1. Procédé pour améliorer la fiabilité d'une mémoire dans un ordinateur consistant à:

   (a) prévoir un code de correction d'erreurs avec des données mémorisées en mémoire;
   (b) détecter et corriger des erreurs en mémoire sur un bit individuel lorsqu'elles apparaissent en utilisant le code de correction d'erreurs;
   (c) détecter la cadence à laquelle des erreurs sur des bits individuels apparaissent;
   (d) délivrer un avertissement si les conditions de fonctionnement sont anormales, de manière à indiquer l'apparition potentielle d'erreurs sur des bits multiples;
   **caractérisé par**
   (e) l'utilisation d'un procédé d'inférence statistique pour déterminer à partir de ladite cadence, et lesdites cadences moyennes de défaillance pour la mémoire, que la mémoire fonctionne dans des conditions normales ou anormales.

2. Dispositif de contrôle de mémoire en ligne comprenant:

   un processeur;
   une mémoire de lecture/écriture à accès direct couplée au processeur, la mémoire à accès direct étant configuré de manière à mémoriser des mots de données et des codes associés de correction d'erreurs;
   un circuit de détection et de correction d'erreurs couplé à la mémoire de lecture/écriture à accès direct, le circuit de détection et de correction d'erreurs étant configuré de manière à déterminer le code de correction d'erreurs spécifique devant être écrit dans la mémoire avec chaque mot de données devant être écrit dans la mémoire, et détecter et corriger des erreurs sur des bits individuels dans des données et dans des codes associés de correction d'erreurs comme étant lus à partir de la mémoire; et
   un contrôleur d'erreurs configuré de manière à répondre au circuit de détection et de correction d'erreurs pour délivrer un avertissement indiquant l'apparition potentielle d'erreurs sur des bits multiples, si la mémoire fonctionne dans des conditions anormales,

   **caractérisé en ce que**
   le contrôleur produit un enregistrement d'erreurs détectées sur des bits individuels et **en ce que** le fait de prévoir ledit avertissement est calculé par inférence statistique à partir de la cadence à laquelle les erreurs en mémoire sur des bits individuels sont apparues, et à partir de cadences moyennes de défaillance provenant de la mémoire.

3. Dispositif selon la revendication 2, dans lequel le processeur est configuré de manière à écrire en retour les données corrigées et un code de correction d'erreurs associé dans la mémoire, à l'emplacement de mémoire d'où les données et le code ont été lus lors de la détection et de la correction d'une erreur dans les données et d'un code de correction d'erreurs associé lu à partir de la mémoire.

4. Dispositif selon la revendication 3, **caractérisé en ce que** le dispositif de contrôle d'erreurs est configuré de manière à répondre au circuit de détection et de correction d'erreurs pour délivrer ledit avertissement, si la cadence, à laquelle des erreurs en mémoire sur des bits individuels sont apparues pendant un premier ou un second intervalle de temps dépasse respectivement des première et seconde limites prédéterminées du taux d'erreurs en mémoire.

5. Dispositif selon la revendication 4, dans lequel le dispositif de contrôle d'erreurs est configuré de manière à fournir ledit avertissement indicatif d'une défaillance dans la mémoire si le taux d'apparition des erreurs en mémoire sur des bits individuels sont apparues pendant le premier intervalle de temps dépasse la première limite prédéterminée de taux d'erreurs en mémoire, et pour délivrer ledit avertissement indicatif d'un taux inhabituellement élevé d'erreurs si le taux d'apparition des erreurs en mémoire sur des bits individuels pendant le second intervalle de temps dépasse la seconde limite prédéterminée du taux d'erreurs.

6. Système de contrôle de mémoire en ligne apte à répondre à la détection et à la correction d'une erreur de mémoire sur des bits individuels, le système incluant un code configuré pour la mémorisation dans un dispositif lisible en mémoire et pouvant être exécuté par un ordinateur, le code incluant une pluralité de modules, le système comprenant:

un premier module configuré pour maintenir un enregistrement d'erreurs en mémoire sur des bits individuels;
un second module configuré pour répondre à la détection et à la correction d'une erreur en mémoire sur des bits individuels pour déterminer l'utilisation d'enregistrement d'erreurs de mémoire si le taux d'apparition des erreurs en mémoire sur bits individuels dépasse une limite prédéterminée;
un troisième module couplé logiquement au second module configuré de manière à délivrer un avertissement si le second module détermine que le taux d'apparition des erreurs en mémoire sur des bits individuels, dépasse la limite prédéterminée; et
un quatrième module couplé logiquement au premier module et configuré de manière à mettre à jour l'enregistrement d'erreurs lors de la détection et de la correction d'une erreur en mémoire sur bit individuel;
le système utilisant un procédé d'inférence statistique pour déterminer à partir de ladite cadence, et de cadences moyennes de défaillance pour la mémoire, si la mémoire fonctionne dans des conditions de fonctionnement normales ou anormales, des conditions de fonctionnement anormales correspondant à la cadence au taux d'erreurs en mémoire sur bits individuels correspondant au fait que le taux d'erreurs en mémoire sur bits individuels dépasse la limite prédéterminée; et
l'avertissement étant indicatif de conditions de fonctionnement anormales et de l'apparition potentielle d'erreurs sur bits multiples.

7. Système selon la revendication 6, comportant en outre un cinquième module configuré de manière à réaliser un enregistrement en surinscription sur la mémoire après la détection et la correction d'une erreur en mémoire.

8. Système selon la revendication 6, dans lequel le second module est configuré de manière à répondre à la détection et à la correction d'une erreur en mémoire sur un bit individuel pour déterminer l'utilisation de l'enregistrement d'erreurs en mémoire si la cadence, à laquelle des erreurs en mémoire sur bits individuels sont apparues, dépasse, une première ou une seconde limite prédéterminée, et le troisième module est configuré de manière à fournir un avertissement d'un premier type si le second module établit que le taux d'apparition d'erreurs en mémoire dépasse la première limite prédéterminée, et en outre comprenant un cinquième module configuré de manière à fournir un avertissement d'un second type, si le second module établit que le taux d'apparition d'erreurs en mémoire, dépasse la seconde limite prédéterminée.

9. Procédé selon la revendication 1, incluant les étapes consistant à déterminer le taux d'apparition d'erreurs en mémoire sur bits individuels pendant le premier intervalle de temps calculé et déterminer le taux d'apparition d'erreurs en mémoire sur bits individuels pendant un second intervalle de temps écoulé, plus long que le premier intervalle de temps écoulé, et selon lequel ledit avertissement est également délivré lorsque le taux d'apparition d'erreurs en mémoire sur bits individuels pendant le premier intervalle de temps ou le second intervalle de temps dépasse respectivement des première et seconde limites prédéterminées du taux d'erreurs en mémoire.

10. Procédé selon la revendication 1, comprenant en outre:

l'utilisation des données corrigées en tant que données exemptes d'erreurs;
écrire en retour les données corrigées et les codes de correction d'erreurs au même emplacement de mémoire, que celui où ils ont été lus; et
délivrer un avertissement respectif si la cadence, à laquelle des erreurs en mémoire sur bits individuels sont apparues, dépasse une limite prédéterminée.

11. Dispositif selon la revendication 2, comprenant en outre:

une unité centrale CPU / une carte de mémoire possédant au moins un connecteur de bus pour la connexion à un bus du système, le processeur étant couplé au connecteur de bus, le processeur étant configuré de manière à écrire en retour les données corrigées et le code de correction d'erreurs associé dans la mémoire à l'emplacement de mémoire, d'où ils ont été lus lors de la détection et de la correction d'une erreur dans des données et d'un code de correction d'erreurs associé lu à partir de la mémoire.

EP 0 806 726 B1

Figure 1

13

Figure 2

Figure 3